# EUROPÄISCHE PATENTANMELDUNG

(11) **EP 1 493 794 A1**
(43) Veröffentlichungstag der Anmeldung: **05.01.2005**
(21) Anmeldenummer: 03015091.6
(22) Anmeldetag: 03.07.2003
(51) Int. Cl.: C09J 153/02, C09J 193/00

(54) **Haftklebstoff-Zusammensetzung**

(71) Anmelder: Collano AG, 6203 Sempach-Station (CH)
(72) Erfinder: Frei, Pia, 6221 Rickenbach (CH)
(74) Vertreter: Hepp, Dieter

(57) **Zusammenfassung**

Es wird eine Haftklebstoff-Zusammensetzung beschrieben, die durch die Verwendung eines hydrierten Styrol-Butadien-Butylen-Styrol-Block-Copolymers verbesserte Eigenschaften hinsichtlich der Soforthaftung wie auch der rückstandslosen Entfernung der Haftklebstoff-Zusammensetzung von einem Trägersubstrat aufweist.

## Beschreibung

Die Erfindung betrifft eine Haftklebstoff-Zusammensetzung für eine wiederlösbare Verbindung zweier Substrate.

Zur temporären Fixierung eines Substrates auf einem anderen werden im Bereich der Textil- und Non-woven-Industrie Haftklebstoffe eingesetzt. Mit dieser Art von Klebstoff ist eine spätere Trennung der Substrate voneinander möglich. Ein typisches Anwendungsbeispiel sind Hygiene-Einlagen im Segment Feminine Care.

Bei der Formulierung einer Haftklebstoff-Zusammensetzung sind sich zwei konträr zu einander verhaltende Aspekte zu berücksichtigen. Bekannte Haftklebstoffe weisen eine zeitabhängige Haftkraft auf, d.h. die Haftung nimmt über die Zeit zu. Wird die Zusammensetzung so formuliert, dass die anfänglichen Klebehaftung, d.h. die Soforthaftung eine verschiebungsfreie Positionierung des Substrates erlaubt, so entwickelt sich nach einiger Zeit eine derartige Haftkraft, welche beim Wiederablösen des Substrates in unerwünschten Klebstoffablagerungen auf dem anderen Substrat resultiert. Dieser Effekt geht auf einen Kohäsionsbruch in der Klebstoff-Fuge zurück.

Wird die Klebstoff-Zusammensetzung allerdings so formuliert, dass die Gebrauchshaftung genügend ist, ergeben sich aus der damit verbundenen geringen Soforthaftung, d.h. der anfänglichen Klebhaftung Probleme mit Verrutschen.

US 5,459,193 beschreibt eine Zusammensetzung für typische Haftklebstoff-Formulierungen im Textil- und Non-woven-Bereich, speziell für Anwendungen im Segment Feminine Care. Diese Zusammensetzung basiert auf einem Styrol-Block-Copolymer (SBC). Allerdings weist eine solche Zusammensetzung die eingangs erwähnte unbefriedigende Anfangshaftung auf. Auch bei einer Substitution eines Teiles oder der Gesamtheit des SEBS-Polymers durch ein SIS- und/oder SBS-Polymer lässt sich zwar die Anfangshaftung erhöhen, gleichzeitig wird aber die Kohäsion so weit reduziert, dass bei der Endhaftung Kohäsionsbruch entsteht, d.h. Rückstände auftreten.

Es ist daher die Aufgabe der Erfindung, die Nachteile der bekannten Klebstoff-Zusammensetzungen zu vermeiden und insbesondere eine Haftklebstoff-Zusammensetzung bereitzustellen, welche eine hohe Soforthaftung aufweist und sich dennoch zusammen mit dem angeklebten Substrat rückstandsfrei vom Trägersubstrat entfernen lässt.

Die erfindungsgemässe Haftklebstoff-Zusammensetzung enthält mindestens eine Harz-Komponente, mindestens ein Styrol-Block-Copolymer, eine Weichmacher-Komponente sowie gegebenenfalls Additive und wird dadurch gekennzeichnet, dass die Zusammensetzung ein hydriertes Styrol-Butadien-Butylen-Styrol-Block-Copolymer enthält.

Als Harz-Komponenten sind verschiedene, für Schmelzkleber, insbesondere für Heissschmelzkleber anwendbare Verbindungen einsetzbar. Beispiele derartiger Harz-Komponenten sind Kolophonium-Derivate einschliesslich Holzölharzen, Tallöl und deren Derivate, Kolophoniumesterharze, natürliche und synthetische Terpen-Harze sowie aliphatische, aromatische oder gemischt aliphatisch-aromatische Kohlenwasserstoffharze. Weitere Harz-Komponenten mit aromatischen Bestandteilen können aus Monomeren mit jeweils einer aromatischen und einer polymerisierbaren, ungesättigten Gruppe hergestellt werden.

Geeignete Monomere sind z.B. Styrol, α-Methylstyrol, Vinyltoluol, Methoxystyrol, tert.-Butylstyrol, Chlorstyrol, Inden-Monomere einschliesslich Methylinden und andere. Aliphatische Monomere sind üblicherweise natürlich und synthetische Terpene, welche C₅- oder C₆-Cyclopentyl- oder Cyclohexyl-Gruppen enthalten und eine Reihe von aromatischen, ringförmigen Substituenten aufweisen. Weitere Monomere für diese Klebrigharze sind 1,3-Butadien, cis-1,3-Pentadien, trans-1,3-Pentadien, 2-Methyl-1,3-butadien, 2-Methyl-2-buten, Cyclopentadien, Dicyclopentadien, Terpen, Terpen-Phenol-Harze und andere. Weitere, verwendbare Harz-Komponenten sind Coumarin-Inden-Harz, phenolische Harze, p-tert-Butylphenol-acetylen-Harze, Phenol-Formaldehyd-Harze, Xylen-Formaldehyd-Harze, Oligomere von Monoolefinen oder Diolefinen, aromatische oder cyclo-aliphatische Kohlenwasserstoffharze, hydrierte Kohlenwasserstoffharze, Kohlenwasserstoff-Harze, hydrierte Holzöl-Harze, hydrierte Ölharze und deren Ester mit einfach oder mehrfach funktionellen Alkoholen. Bevorzugt sind Kohlenwasserstoffharze, Polyterpenharze, Kolophoniumharzester.

Die Harz-Komponente wird der Haftklebstoff-Zusammensetzung in einem Anteil zwischen zwischen 20 und 70 Gew.% und in bevorzugter Weise zwischen 40 und 60 Gew% bezogen auf das Gesamtgewicht zugesetzt. Die variierenden Eigenschaften der jeweils eingesetzten Harz-Komponente bzw. des Gemisches an Harzen wirken sich in Grenzen auf den exakten Anteil des Harzes an der Zusammensetzung aus.

Das Styrol-Block-Copolymer beruht auf einer A-B-A-Struktur, d.h. zu Beginn und zu Ende des Polymermoleküls sind Styrol-Abschnitte vorgesehen, die beispielsweise einen B-Block aus 1,3-Butadien-Monomeren einschliessen (SBS-Copolymer). Ebenso vorstellbar ist ein B-Block mit Isopren-Monomeren. Durch eine Variation der Block-Grössen kann bei der Polymerisation dieser Block-Copolymere mehr oder weniger gezielt Einfluss auf die Eigenschaften dieser Copolymere genommen werden. Derartige verschiedene Styrol-Block-Copolymere sind dem Fachmann bekannt und können von diesem für das beabsichtigte Einsatzgebiet gezielt ausgewählt werden.

Der Einsatz von Weichmacher-Komponenten erlaubt eine Verbesserung der physikalischen Eigenschaften einer Zusammensetzung, unter anderem eine verbesserte Verarbeitbarkeit, Beschichtbarkeit etc. In der erfindungsgemässen Zusammensetzung werden ölartige Weichmacher-Komponenten eingesetzt. Bevorzugt ist die Weichmacher-Komponente bei Raumtemperatur eine Flüssigkeit, beispielsweise ein Kohlenwasserstoff-Öl oder Polybuten. Besonders bevorzugt sind Mineralöle und hier Mineralöle mit einem geringen Bestandteil an aromatischen Verbindungen (Gekennzeichnet durch eine Kohlenstoffverteilung von C/A <2%, C/N <40%, C/P >60% gemäss DIN 51378 oder ASTM D 2140). Weitere geeignete Verbindungen sind Olefin-Oligomere, niedermolekulare Polybuten-Polymere, Pflanzenöle sowie deren Derivate und andere, geeignete Weichmacher-Flüssigkeiten. Der Anteil dieser Weichmacher-Komponente in der Haftklebstoff-Zusammensetzung beträgt zwischen 20 und 40 Gew%, vorzugsweise 25 bis 35 Gew% bezogen auf die Gesamtmasse.

Durch den Zusatz von Additiven zur erfindungsgemässen Zusammensetzung kann vorteilhaft Einfluss unter anderem auf die Stabilität des Haftklebstoffes genommen werden. Geeignete Additive als Stabilitator sind beispielsweise sterisch gehinderte Phenole, Phospite oder Thioester. Diese können in gewissem Rahmen Zersetzungsreaktionen, die durch den Luftsauerstoff oder andere äussere Einflüsse (z.B. Lichtbestrahlung) eintreten, unterbinden.

Das hydrierte Styrol-Butadien-Butylen-Styrol-Block-Copolymer weist neben den beiden terminalen Styrol-Block-Abschnitten einen zentralen Block auf, der sich wiederum aus Butadien- und Butylen-Monomeren-Blöcken zusammensetzt. Dieser Butadien-Butylen-Block ist vorzugsweise selektiv hydriert. Diese Modifikation erlaubt eine gewisse Anpassung der Copolymere an gestellte Anforderungen. Das Verhältnis von Styrol-Block-Anteilen zu den gemeinsamen Anteilen von Olefin-Block und Alkylen-Block kann variieren und beträgt zwischen etwa 20:80 und etwa 80:20. Vorteilhaft sind Verhältnisse zwischen 25:75 und 35:65 sowie zwischen 60:40 und 75:25: Besonders bevorzugt ist ein Verhältnis von etwa 30:70.

Die Erfindung wird anhand der nachfolgenden Beispiele näher erläutert. Die Mengenangaben sind, soweit nicht explizit anders vermerkt, Gewichtsprozent in Bezug auf die GesamtZusammensetzung.

### Beispiel 1

Zu 10 Gew.% eines SBS-Polymers (Europrene SOL TE 6414, Polimeri Europa) werden 52.3 Gew.% an Kohlenwasserstoff-Harzen (Escorez 5400 40.3 Gew.%; Escorez 5415 12 Gew.%, Exxon Mobil) und 30 Gew.% eines Öles (Shell Catenex PH941, Shell) gemischt. Dieser Mischung werden noch Stabiliatoren (Irganox 1010 und Irganox PS 800, je 0.1 Gew.%; Ciba) zugesetzt. Dem Gemisch werden weiter 7.5 Gew.% eines SBBS-Polymers (Tuftec P1000; Asahi Kasei) hinzugefügt.

Die Zusammensetzung besitzt ein leicht gelbliches, transparentes Aussehen und weist einen Erweichungspunkt von 93°C gemäss DIN 52011 auf.
Durch die Verwendung des SBBS-Polymers ergibt sich überraschend, dass Anfangs- und Endhaftwerte wie auch die Kohäsion den Anwendungsansprüchen voll genügen.

### Beispiele 2-4:

Die Beispiele 2 bis 4 wurden gemäss der Vorgehensweise von Beispiel 1 hergestellt; ihre jeweilige Zusammensetzungen ist in Tabelle 1 wiedergegeben.

**Tabelle 1:**

| Zusammensetzungen der Beispiele 2-4 | | | |
|---|---|---|---|
| | 2 | 3 | 4 |
| Tuftec P1000 | 5% | 7.5% | 5% |
| Europrene SOL TE 6414 | 10% | 10% | 10% |
| Escorez 5400 | 42.8 | 40.3 | 40.3 |
| Escorez 5415 | 12 | 9 | 6 |
| Sylvares SA 115 | - | 3 | 6 |
| Shell Catenex PH941 | 30 | 30 | 30 |
| Irganox 1010 | 0.1 | 0.1 | 0.1 |
| Irganox PS800 | 0.1 | 0.1 | 0.1 |

In analoger Weise wurden die Vergleichsbeispiele V1 und V2 hergestellt, deren Zusammensetzungen in Tabelle 2 wiedergegeben sind.

**Tabelle 2:**

| Zusammensetzungen der Vergleichsbeispiele V1 und V2 | | |
|---|---|---|
| | V1 | V2 |
| Kraton D 1107 | 15 | - |
| Kraton G 1650 | - | 15 |
| Europrene SOL T 168 | 15 | |
| Escorez 5300 | 49 | 34 |
| Escorez 5320 | - | 20 |
| Shell Catenex PH 941 | 20 | 30 |
| Irganox 1010 | 1 | 1 |

Die Haftklebstoff-Zusammensetzungen gemäss der Beispiele 1 bis 4 sowie der Vergleichsbeispiele wurden als dünne Schicht auf eine PE-Folie appliziert (Auftragsgewicht 25g/m²). Abschnitte dieser Folie wurden auf ein Baumwoll-Substrat geklebt und unmittelbar sowie verzögert nach einer Lagerung von 4 Stunden bei 40°C, belastet mit 36 g/m² mittels einer Zugprüfmaschine mit einer Geschwindigkeit von 500 mm/min im 90°-Winkel abgezogen. Beurteilt wurde die Haftung in N/25 mm, zudem erfolgte eine visuelle Beurteilung bezüglich Klebstoffrückstände auf dem Baumwollsubstrat.

Tabelle 3 zeigt die erhaltenen Ergebnisse.

**Tabelle 3:**

| Messwerte der Peel-Versuche auf Baumwolle (BW) | | | | | | |
|---|---|---|---|---|---|---|
| | 1 | 2 | 3 | 4 | V1 | V2 |
| Peel (unmittelbar) | 2.7 | 2.9 | 2.3 | 2.5 | 0.9 | 0.9 |
| Rückstand auf BW | keine | keine | keine | keine | keine | keine |
| Peel (verzögert) | 2.4 | 3.2 | 3.0 | 2.8 | 1.7 | 2.4 |
| Rückstand auf BW | keine | keine | keine | keine | keine | keine |
| Die Messwerte sind in N/25mm angegeben. | | | | | | |

Die Ergebnisse der Peel-Versuche mit Zusammensetzungen gemäss der Beispiele 1 bis 4 zeigen deutlich die verbesserten Haftwerte sowohl unmittelbar beim Anbringen sowie beim Entfernen nach einer Verzögerungsspanne. Die Vergleichsbeispiele V1 und V2 zeigen deutlich grössere Unterschiede bei diesen Wertepaaren.

## Patentansprüche

1. Haftklebstoff-Zusammensetzung enthaltend mindestens eine Harz-Komponente, vorzugsweise ein Kohlenwasserstoff-Harz, mindestens ein Styrol-Block-Copolymer, eine Weichmacher-Komponente und gegebenenfalls Additive, **dadurch gekennzeichnet, dass** die Haftklebstoff-Zusammensetzung ein hydriertes Styrol-Butadien-Butylen-Styrol-Block-Copolymer enthält.

2. Haftklebstoff-Zusammensetzung nach Anspruch 1, **dadurch gekennzeichnet, dass** die Harz-Komponente ausgewählt ist aus der Gruppe enthaltend Kohlenwasserstoffharze, Polyterpenharze, Kolophoniumharzester.

3. Haftklebstoff-Zusammensetzung nach einem der Ansprüche 1 oder 2, **dadurch gekennzeichnet, dass** die Weichmacher-Komponente ausgewählt ist aus der Gruppe enthaltend Kohlenwasserstoff-Öl, Polybuten, Mineralöle, insbesondere Mineralöle mit einem geringen Anteil an aromatischen Verbindungen, Olefin-Oligomere, niedermolekulare Polybuten-Polymere, Pflanzenöle sowie Pflanzenöl-Derivate.

4. Haftklebstoff-Zusammensetzung nach einem der Ansprüche 1 bis 3, **dadurch gekennzeichnet, dass** das hydrierte Styrol-Butadien-Butylen-Styrol-Block-Copolymer ein Verhältnis von Styrol-Block-Anteilen zu den gemeinsamen Anteilen von Olefin-Block und Alkylen-Block zwischen 20:80 und 80:20, bevorzugt zwischen 25:75 und 35:65, und besonders bevorzugt von etwa 30:70 aufweist.

5. Haftklebstoff-Zusammensetzung nach einem der Ansprüche 1 bis 4, **dadurch gekennzeichnet, dass** der Anteil des hydrierten Block-Copolymers zwischen 3 und 20 Gew%, vorzugsweise zwischen 4 und 15 Gew% und weiter bevorzugt zwischen 5 und 10 Gew% beträgt.

6. Haftklebstoff-Zusammensetzung nach einem der Ansprüche 1 bis 5, **dadurch gekennzeichnet, dass** die mindestens eine Harz-Komponente einen Anteil in der Haftklebstoff-Zusammensetzung von zwischen 20 und 70 Gew.%, bevorzugt zwischen 40 und 60 Gew% aufweist.

7. Haftklebstoff-Zusammensetzung gemäss einem der Ansprüche 1 bis 6, **dadurch gekennzeichnet, dass** die Haftklebstoff-Zusammensetzung als Additive mindestens einen Stabiliator, insbesondere sterisch gehinderte Phenole, Phospite oder Thioester enthält.

8. Haftklebstoff-Zusammensetzung gemäss einem der Ansprüche 1 bis 9, **dadurch gekennzeichnet, dass** der Anteil der Additive zwischen 0 und 5 Gew%, vorzugsweise zwischen 0.05 und 3 Gew% und weiter bevorzugt zwischen 0.1 und 1 Gew% beträgt.

9. Haftklebstoff-Zusammensetzung gemäss einem der Ansprüche 1 bis 8, **dadurch gekennzeichnet, dass** der Anteil an Weichmacher-Komponente zwischen 20 und 40 Gew%, vorzugsweise 25 bis 35 Gew% beträgt.

10. Verwendung eines hydrierten Styrol-Butadien-Butylen-Styrol-Block-Copolymers zur Modifikation der Soforthaftung und Dauerhaftung einer Haftklebstoff-Zusammensetzung.

11. Verwendung nach Anspruch 10, bei der die Haftklebstoff-Zusammensetzung ein Kohlenwasserstoff-Harz, mindestens ein Styrol-Block-Copolymer und eine Weichmacher-Komponente enthält.

12. Substrat, enthaltend eine zumindest partielle Beschichtung mit einer Haftklebstoff-Zusammensetzung nach einem der Ansprüche 1 bis 9.
